# EUROPEAN PATENT APPLICATION

(11) **EP 4 556 220 A1**
(43) Date of publication of application: **21.05.2025**
(21) Application number: 23839703.8
(22) Date of filing: 14.07.2023
(51) Int. Cl.: B32B 27/00, C09J 11/06, C09J 109/00, C09J 109/02, C09J 109/06, C09J 123/26, C09J 125/10, C09J 201/02, C09J 7/35

(54) **THERMOPLASTIC MULTILAYER ADHESIVE FILM**

(30) Priority: 15.07.2022 JP 2022114038
(71) Applicant: Aicello Corporation, Toyohashi-shi, Aichi 441-1115 (JP)
(72) Inventor: OHTSUKA, Ryochi, Toyohashi-shi, Aichi 441-1115 (JP)
(74) Representative: Meissner Bolte Partnerschaft mbB
(86) International application number: PCT/JP2023/026030
(87) International publication number: WO 2024/014534

(57) **Abstract**

The present invention addresses the problem of achieving a thermoplastic multilayer adhesive film that is capable of bonding adherends, which are ordinarily difficult to be bonded to each other by one adhesive, with a high adhesive force that is able to exhibit a sufficient tensile shear adhesive strength and a sufficient 90 degree peel strength. The present invention provides, as a means for solving the problem, a thermoplastic multilayer adhesive film which has the resin layer A and the resin layer B described below. Resin layer A: a layer which contains a carboxylic acid-modified polyolefin and/or an ionomer Resin layer B: a layer which contains a crosslinking agent and at least one copolymer that is selected from among a carboxy-modified styrene-butadiene copolymer, a carboxy-modified acrylonitrile-styrene-butadiene copolymer and a carboxy-modified methyl methacrylate-butadiene copolymer

## Description

### TECHNICAL FIELD

The present invention relates to a thermoplastic multilayer adhesive film.

### BACKGROUND ART

As described in Patent Literature 1, when bonding two adherends made of two different materials together while being interposed between the adherends, there has been an adhesive resin laminate including a layer containing a modified polyolefin resin and an epoxy crosslinking agent and a layer containing a polyolefin-based resin so as to achieve good adhesiveness to both the adherends. Further, it is also known that the obtained laminate has high peel strength when T-shaped peeling is performed.

Although sheet-shaped adhesives to bond different materials have been known as described above, according to the invention described in Patent Literature 1, only adhesive strength sufficient to measure peel strength by the T-shaped peeling can be exhibited, and the adhesive strength is not sufficient to cause a cohesive failure between the layers in the adhesive resin laminate after the bonding, for example. Further, it has been difficult to achieve a heat bonding to the adherends such as an ABS resin, a polycarbonate resin, an acrylic resin, and a vinyl chloride resin.

### CITATION LIST

### PATENT LITERATURE

Patent Literature 1: JP2018-131553A

### SUMMARY OF INVENTION

### TECHNICAL PROBLEM

An object of the present invention is to obtain a thermoplastic multilayer adhesive film that can be heat-melted and can heat-bond adherends that are difficult to bond with a single type of adhesive in the related art each other so as to exhibit a high adhesive force that allows the film to exhibit sufficient tensile shear adhesive strength and 90-degree peel adhesive strength.

### SOLUTION TO PROBLEM

As a result of intensive studies to solve the above problems, the present inventors have found that the problems can be solved by the following methods, and have completed the present invention.
1. A thermoplastic multilayer adhesive film including the following resin layer A and the following resin layer B:
   resin layer A: a layer containing a carboxylic acid-modified polyolefin and/or an ionomer, and
   resin layer B: a layer containing one or more selected from a carboxy-modified styrene-butadiene copolymer, a carboxy-modified acrylonitrile-styrene-butadiene copolymer, and a carboxy-modified methyl methacrylate-butadiene copolymer, and a crosslinking agent.
2. The thermoplastic multilayer adhesive film according to 1, in which
   the crosslinking agent contained in the resin layer B is a crosslinking agent containing an oxazoline group or a carbodiimide group.
3. The thermoplastic multilayer adhesive film according to 1 or 2, in which
   in the resin layer A, a total content of the carboxylic acid-modified polyolefin and the ionomer is 8.0% by weight or more.
4. The thermoplastic multilayer adhesive film according to any one of 1 to 3, in which
   in the resin layer B, a content of the crosslinking agent is 1.0 part by weight to 80.0 parts by weight with respect to 100 parts by weight in total of the one or more selected from the carboxy-modified styrene-butadiene copolymer, the carboxy-modified acrylonitrile-styrene-butadiene copolymer, and the carboxy-modified methyl methacrylate-butadiene copolymer.
5. A laminate obtained by heat-bonding the following adherend A to a surface of the resin layer A and the following adherend B to a surface of the resin layer B of the thermoplastic multilayer adhesive film according to any one of 1 to 4,
   adherend A: one or more selected from a metal, a polypropylene resin, a polyethylene resin, a polyamide resin, and a thermosetting resin, and
   adherend B: one or more selected from an ABS resin, a polycarbonate resin, an acrylic resin, a polyvinyl chloride resin, and an amorphous polyester resin.
6. A bonding method including:
   superposing the following adherend A on a surface of the resin layer A of the thermoplastic multilayer adhesive film according to any one of 1 to 5;
   superposing the following adherend B on a surface of the resin layer B of the thermoplastic multilayer adhesive film; and
   heat-melting and heat-bonding the resin layer A and the resin layer B,
   adherend A: one or more selected from a metal, a polypropylene resin, a polyethylene resin, a polyamide resin, and a thermosetting resin, and
   adherend B: one or more selected from an ABS resin, a polycarbonate resin, an acrylic resin, a polyvinyl chloride resin, and an amorphous polyester resin.
7. A method including:
   a step of superposing the following adherend A on a surface of the resin layer A of the thermoplastic multilayer adhesive film according to any one of 1 to 6 and heating to bond the two; and
   after this step, a step of forming a layer by the following adherend B heat-molten on a surface of the resin layer B of the thermoplastic multilayer adhesive film,
   or a method including:
      a step of superposing the following adherend B on a surface of the resin layer B of the thermoplastic multilayer adhesive film according to any one of 1 to 6 and heating to bond the two; and
      after this step, a step of forming a layer by the following adherend A heat-molten on a surface of the resin layer A of the thermoplastic multilayer adhesive film,
      adherend A: one or more selected from a metal, a polypropylene resin, a polyethylene resin, a polyamide resin, and a thermosetting resin, and
      adherend B: one or more selected from an ABS resin, a polycarbonate resin, an acrylic resin, a polyvinyl chloride resin, and an amorphous polyester resin.
8. A method for producing a thermoplastic multilayer adhesive film, the method including:
   a step of applying an aqueous composition containing a crosslinking agent and one or more selected from a carboxy-modified styrene-butadiene copolymer latex, a carboxy-modified acrylonitrile-styrene-butadiene copolymer latex, and a carboxy-modified methyl methacrylate-butadiene copolymer latex onto a resin layer A that includes a layer containing a carboxylic acid-modified polyolefin or an ionomer and that has been subjected to a surface treatment as necessary; and
   a step of drying water at a temperature at which the resin layer A does not soften or melt, and forming a resin layer B.

### ADVANTAGEOUS EFFECTS OF INVENTION

According to the present invention, it is possible to obtain a thermoplastic multilayer adhesive film that can bond adherends that are difficult to be heat-bonded with a single type of film-shaped or sheet-shaped adhesive in the related art each other so as to exhibit a high adhesive force that allows the film to exhibit sufficient tensile shear adhesive strength. Furthermore, an effect of providing a method for producing the thermoplastic multilayer adhesive film and a method for bonding with the thermoplastic multilayer adhesive film with a stronger adhesive force can be achieved.

### DESCRIPTION OF EMBODIMENTS

The present invention is based on a thermoplastic multilayer adhesive film including a resin layer A and a resin layer B as adhesive layers.

In the case where the thermoplastic multilayer adhesive film is formed by laminating one resin layer A and one resin layer B, an adherend A can be laminated and bonded on a resin layer A side, and an adherend B can be laminated and bonded on a resin layer B side.

### <Resin Layer A>

The resin layer A according to the present invention is a layer containing a carboxylic acid-modified polyolefin and/or an ionomer.

In the resin layer A, the carboxylic acid-modified polyolefin and the ionomer can be appropriately blended with an ethylene-based resin, a propylene-based resin, or a butene-based resin and used.

A total content of the carboxylic acid-modified polyolefin and the ionomer in the resin layer A is 8.0% by weight or more, preferably 25.0% by weight or more, more preferably 40.0% by weight or more, and still more preferably 50.0% by weight or more. In the case where the total content of the carboxylic acid-modified polyolefin and the ionomer is less than 8.0% by weight, an adhesive force to the adherend A and interfacial peeling with the resin layer B will be likely to occur, making it difficult to obtain expected adhesive strength (there is a risk that sufficient adhesive force will not be obtained).

The thickness of the resin layer A is preferably 7 µm or more, more preferably 20 µm or more, and still more preferably 40 µm or more. Further the thickness is preferably 250 µm or less, more preferably 150 µm or less, and still more preferably 100 µm or less.

### (Carboxylic acid-modified polyolefin)

The carboxylic acid-modified polyolefin is obtained by graft polymerization of an unsaturated carboxylic acid or an anhydride thereof to a base polyolefin. The base polyolefin may be at least one selected from an ethylene-based resin, a propylene-based resin, and a butene-based resin, and preferably at least one selected from an ethylene-based resin and a propylene-based resin.

Examples of the ethylene-based resin that is the base polyolefin of the carboxylic acid-modified polyolefin include at least one selected from a low density polyethylene (LDPE), a linear low density polyethylene (LLDPE), an ultralow density polyethylene (ULDPE), a medium density polyethylene (MDPE), a high density polyethylene (HDPE), an ultra high density polyethylene, and copolymers of ethylene and other monomers (for example, an ethylene/vinyl acetate copolymer (EVA), an ethylene/acrylic acid copolymer, an ethylene/methacrylic acid copolymer, an ethylene/acrylic acid ester copolymer, an ethylene/methacrylic acid ester copolymer, an ethylene/butene-1 copolymer, an ethylene/propylene/butene-1 copolymer, a copolymer of ethylene/α-olefin having 3 to 12 carbon atoms, and an ethylene/non-conjugated diene copolymer).

In the case where the adherend A has a low melting point like low density polyethylene, the carboxylic acid-modified polyolefin used in the present invention is preferably one having a melting point equal to or lower than that of the adherend A, such as an LDPE-based material or an EVA-based material.

Examples of the propylene-based resin that is the base polyolefin of the carboxylic acid-modified polyolefin include at least one selected from random polypropylene, block polypropylene, homopolypropylene, and copolymers of propylene and other monomers.

Examples of the butene-based resin that is the base polyolefin of the carboxylic acid-modified polyolefin include at least one selected from a polybutene-1 and copolymers of butene-1 and an α-olefin.

Examples of the unsaturated carboxylic acid for carboxylic acid-modifying the polyolefin include maleic acid, itaconic acid, fumaric acid, acrylic acid, and methacrylic acid. Examples of derivatives of the unsaturated carboxylic acid include maleic acid monoesters, maleic acid diesters, maleic anhydride, itaconic acid monoesters, itaconic acid diesters, itaconic anhydride, fumaric acid monoesters, fumaric acid diesters, fumaric anhydride, 1,2,3,6-tetrahydrophthalic acid, methylenesuccinic acid, citraconic acid, citraconic anhydride, acrylic acid alkyls such as methyl acrylate, and alkyl methacrylates such as methyl methacrylate. Among them, maleic anhydride and a derivative thereof are preferable from the viewpoint of adhesiveness. As the unsaturated carboxylic acid, these may be used alone or in mixture of two or more.

The amount of acid modification of the carboxylic acid-modified polyolefin (amount of structural units derived from the grafted unsaturated carboxylic acid or unsaturated carboxylic acid derivative) varies depending on a type of the grafted unsaturated carboxylic acid or unsaturated carboxylic acid derivative. **In** the case of maleic anhydride, for example, from the viewpoint of adhesiveness, the amount is preferably 0.01% by weight or more, and more preferably 1.0% by weight or more. On the other hand, from the viewpoint of film formability, the amount is preferably 10.0% by weight or less, and more preferably 5.0% by weight or less.

A method for obtaining the carboxylic acid-modified polyolefin is not particularly limited, and for example, use can be made of a method including melt-kneading a resin composition containing 100 parts by weight of a polyolefin, 0.05 parts by weight to 5 parts by weight of an unsaturated carboxylic acid and/or an unsaturated carboxylic acid derivative, and 0.05 parts by weight to 5 parts by weight of an organic peroxide, and grafting the unsaturated carboxylic acid and/or the unsaturated carboxylic acid derivative to the polyolefin.

Examples of the organic peroxide include dicumyl peroxide, di-tert-butyl peroxide, 2,5-dimethyl-2,5-di-(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butyl peroxybenzoate, tert-butyl peroxyisopropyl carbonate, diacetyl peroxide, lauroyl peroxide, and tert-butylcumyl peroxide. As the above component, from the viewpoint of adhesiveness, 2,5-dimethyl-2,5-di-(tert-butylperoxy)hexane and 2,5-dimethyl-2,5-di-(tert-butylperoxy)hexyne-3 are preferred. As the above component, these may be used alone or in mixture of two or more.

A blending amount of the organic peroxide is, from the viewpoint of adhesiveness, 0.05 parts by weight or more, preferably 0.2 parts by weight or more, and more preferably 0.5 parts by weight or more, per 100 parts by weight of the polyolefin. Further, from the viewpoint of controlling a decrease in melt viscosity during acid modification, the blending amount thereof is 5 parts by weight or less, preferably 4 parts by weight or less, and more preferably 3 parts by weight or less.

Examples of the carboxylic acid-modified polypropylene-based resin include BYNEL manufactured by Dow Chemical Company, UMEX manufactured by Sanyo Chemical Industry Co., Ltd., ADMER manufactured by Mitsui Chemicals, Inc., and MODIC manufactured by Mitsubishi Chemical Corporation.

Examples of the carboxylic acid-modified polypropylene-based resin include propylene homopolymers; copolymers (including block copolymers and random copolymers) of propylene and small amount of other α-olefins (for example, ethylene, 1-butene, 1-hexene, 1-octene, or 4-methyl-1-pentene), into which a carboxy group has been introduced. Among the polypropylenes, those having a melting point that is not too high are preferred, and a melting point of 165°C or less is preferred, 155°C or less is more preferred, and 145°C or less is still more preferred. Further, from the viewpoint of heat resistance, a melting point of 125°C or higher is also preferred. Examples of such a polypropylene-based resin include propylene homopolymers having high stereoregularity (isotactic pentad fraction is usually 96 mol% or more, and preferably 98 mol% or more). As the polypropylene-based resin, these may be used alone or in mixture of two or more.

Examples of the carboxylic acid-modified polyethylene-based resin include ADMER manufactured by Mitsui Chemicals, Inc., MODIC manufactured by Mitsubishi Chemical Corporation, OREVAC and LOTADER manufactured by SKFP, and BYNEL manufactured by Dow Chemical Company. Generally, the carboxylic acid-modified polyethylene-based resin has a lower melting point than the carboxylic acid-modified polypropylene-based resin, and therefore, heat bonding can be achieved by melting at a lower temperature.

### (Ionomer)

The ionomer is a special resin in which a carboxyl group of an ethylene-methacrylic acid copolymer or an ethylene-acrylic acid copolymer have been neutralized with metal ions such as sodium, zinc, or potassium, and intermolecular bonds are formed by these metal ions. When the ionomer melts due to heating during the heat bonding, ionic bonds between the carboxyl group and the metal ions loosen and become activated, allowing the ionomer to react with a crosslinking agent contained in the resin layer B.

A polymer having the carboxy group may be a polymer having a carboxy group obtained by copolymerizing an unsaturated carboxylic acid monomer with another monomer. In addition, the above-described carboxylic acid-modified polyolefin may be used. Moreover, one type of ionomer may be used, or a plurality of types may be used.

Examples of such an unsaturated carboxylic acid monomer include (meth)acrylic acid, maleic acid, fumaric acid, itaconic acid, monomethyl maleic acid, monoethyl maleic acid, maleic anhydride, and itaconic anhydride.

As the other monomer, use can be made of (meth)acrylic acid esters such as methyl (meth)acrylate, ethyl (meth)acrylate, isobutyl (meth)acrylate, n-butyl (meth)acrylate, isooctyl (meth)acrylate, and diethyl maleate; vinyl esters such as vinyl acetate and vinyl propionate; and alkenes such as ethylene, propylene, and butene.

Further, as the metal ions that form a salt with the carboxy group of the polymer having the carboxy group to form the ionomer, preferred are ions of alkali metals such as lithium, sodium, and potassium, and ions of divalent metals such as magnesium, calcium, zinc, cobalt, nickel, copper, and lead. In particular, the ions of the alkali metals are preferred.

Examples of the ionomer include HIMILAN manufactured by Dow-Mitsui Polychemicals Company, Ltd.

### (Other Resins)

In addition to the carboxylic acid-modified polyolefin and the ionomer, other resins may be contained in the resin layer A as long as the effects of the present invention are not impaired. Examples of such a resin include polyolefin-based resins such as the above-mentioned ethylene-based resin, propylene-based resin, and butene-based resin.

As these polyolefin-based resins, the various polyolefins shown as the base polymer of the carboxylic acid-modified polyolefin described above can be directly used without carboxylic acid modification.

In the case where these other resins are contained in the resin layer A, the content of the other resins is preferably 92% by weight or less, and more preferably 50% by weight or less based on the entire resin layer A.

### <Resin Layer B>

### (Carboxy-modified Styrene-butadiene Copolymer, Carboxy-modified Acrylonitrile-styrene-butadiene Copolymer, and Carboxy-modified Methyl Methacrylate-butadiene Copolymer)

The resin layer B in the present invention is a layer containing one or more selected from a carboxy-modified styrene-butadiene copolymer, a carboxy-modified acrylonitrile-styrene-butadiene copolymer, and a carboxy-modified methyl methacrylate-butadiene copolymer.

This resin layer B is a layer of a resin containing a copolymer obtained by modifying, with a carboxy group, a copolymer obtained by using styrene and/or butadiene as a main monomer component. The copolymer can also be obtained by copolymerizing styrene and/or butadiene with acrylonitrile.

Furthermore, the resin may contain a copolymer containing a monomer capable of copolymerizing with an aromatic vinyl compound or a conjugated diene compound such as butadiene, such as a (meth)acrylic acid alkyl ester such as methyl (meth)acrylate or ethyl (meth)acrylate, an olefin such as ethylene or propylene, and (meth)acrylamide.

This copolymer is modified with a carboxy group, and may also be one obtained by copolymerizing a monomer having a carboxy group, such as (meth)acrylic acid.

The carboxy-modified styrene-butadiene copolymer, the carboxy-modified acrylonitrile-styrene-butadiene copolymer, and the carboxy-modified methyl methacrylate-butadiene copolymer contained in the resin layer B are resins different from the carboxylic acid-modified polyolefin or the ionomer contained in the resin layer A.

The carboxy-modified styrene-butadiene copolymer, the carboxy-modified acrylonitrile-styrene-butadiene copolymer, and the carboxy-modified methyl methacrylate-butadiene copolymer are each preferably supplied in the form of a latex, and are also preferably supplied in the form of an aqueous solution or an aqueous dispersion. A coating liquid to form the resin layer B is preferably aqueous in this way. In the form of latex, for example, it is easier to increase the resin concentration than in the case of the solution, and it is easier to be mixed with an aqueous crosslinking agent solution, resulting in excellent workability. Therefore, the resin layer B in which the crosslinking agent is uniformly dispersed can be easily formed. Further, since a resin phase is originally separated from a water phase, a heating and drying step for forming the resin layer B can be carried out relatively quickly. The formed resin layer B contains a resin derived from dispersed resin particles of the latex and the crosslinking agent present uniformly therein, and the crosslinking agent is also present uniformly inside the resin on a surface of the resin layer B in contact with the resin layer A.

The latex may contain another crosslinking agent (internal crosslinking agent such as a vulcanizing agent that acts on double bonds of the copolymer) for crosslinking the resin with groups other than the carboxyl group in order to increase film strength when made into the film. Such a crosslinking agent originally contained in the latex may be contained separately from the following crosslinking agent. Further, the latex may contain a neutralizer or a surfactant.

The latices of the above-mentioned carboxy-modified styrene-butadiene copolymer, the carboxy-modified acrylonitrile-styrene-butadiene copolymer, and the carboxy-modified methyl methacrylate-butadiene copolymer can be selected from Latex SB and PCL manufactured by JSR Corporation, NALSTAR and SMARTEX manufactured by NIPPON A&L INC., Nipol of SBR LATEX and Nipol of NBR LATEX manufactured by Zeon Corporation, and LACSTAR manufactured by DIC Corporation.

The thickness of the resin layer B is preferably 2 µm or more, more preferably 10 µm or more, and still more preferably 13 µm or more. Further, the thickness is preferably 200 µm or less, more preferably 100 µm or less, and still more preferably 50 µm or less.

### (Crosslinking Agent)

The resin layer B contains the crosslinking agent capable of reacting with the carboxy groups contained in the resins contained in the resin layers A and B.

At this time, as an aqueous crosslinking agent composition, in the case where the resin constituting the resin layer B is in the form of a latex, an aqueous solution or an aqueous dispersion, which is an aqueous dispersion copolymer resin, when a crosslinking agent is added thereto, it is desirable that the crosslinking agent itself is in the form of an aqueous solution, an aqueous emulsion or an aqueous dispersion. Further, one or more of three types of crosslinking agents, that is, a crosslinking agent in the form of an aqueous solution, a crosslinking agent in the form of an aqueous emulsion, and a crosslinking agent in the form of an aqueous dispersion, can be used. In particular, it is more preferable to use a crosslinking agent in the form of an aqueous solution and a crosslinking agent in the form of an aqueous dispersion in combination. A mixing ratio of the solid content of the crosslinking agent in the form of an aqueous solution to that of the crosslinking agent in the form of an aqueous dispersion is preferably 2:8 to 8:2, more preferably 3:7 to 7:3, and still more preferably 4:6 to 6:4.

Further, it is desirable to add a large amount of crosslinking agent to the resin layer B such that the crosslinking agent can crosslink not only the carboxyl group in the resin layer B but also the carboxyl group contained in the resin layer A. The crosslinking in the resin layer B progresses due to the heating during film formation and drying at the time of the coating. The formed resin layer B has a crosslinked structure formed therein. At the same time, the resin layer B contains a large amount of unreacted crosslinking agent. When the film is subsequently bonded to an adherend, due to the heating, the unreacted crosslinking agent will react with the resin in the resin layer A, crosslink an interface between the resin layer A and the resin layer B, and even cause a crosslinking reaction within the resin layer B.

During the heat bonding, both the layers, that is, the resin layer A and the resin layer B are required to be melted, softened, or liquefied by the heating.

By reacting the carboxy group of the resin layer A and the carboxy group of the resin layer B with the unreacted crosslinking agent in the resin layer B by the heating at the time of the heat bonding, interface strength is greatly improved, and very strong tensile shear adhesive strength can be obtained.

In the case where a plurality of crosslinking agents having different crosslinking temperatures are used in combination, in order to ensure the adhesiveness when the resin layer B is laminated on the resin layer A, the resin layer B is cured by heating at a low temperature using a crosslinking agent having a lower crosslinking temperature. Next, an adherend is placed on the resin layer B side of the formed laminate of the resin layer A and the resin layer B, followed by heating at a high temperature to caused crosslinking of a crosslinking agent having a higher crosslinking temperature. Accordingly, the adherend can be laminated on the resin layer B side.

Further, a plurality of crosslinking agents having different weight average molecular weights or different equivalent weights of reactive groups can be used in combination.

Such crosslinking agents are crosslinking agents capable of reacting with a carboxy group, and are preferably crosslinking agents containing an oxazoline group, a carbodiimide group, an isocyanate group, an epoxy group, an amino group, an organometallic salt, or the like. Among these, it is preferable that the crosslinking agent has an oxazoline group and/or a carbodiimide group. **In** this case, coatability becomes better than the case of using a crosslinking agent having an isocyanate group, an epoxy group, an amino group, an organometallic salt, or the like.

The content of the crosslinking agent in the resin layer B with respect to the total of 100 parts by weight of the one or more selected from the carboxy-modified styrene-butadiene copolymer, the carboxy-modified acrylonitrile-styrene-butadiene copolymer, and the carboxy-modified methyl methacrylate-butadiene copolymer is preferably 1.0 part by weight or more, more preferably 2.5 parts by weight or more, and still more preferably 4.0 parts by weight or more. Further, the content is preferably 80.0 parts by weight or less, more preferably 40.0 parts by weight or less, still more preferably 30.0 parts by weight or less, and most preferably 20.0 parts by weight or less. **In** the case where the amount of the contained crosslinking agent is less than 1.0 part by weight, the interface strength with the resin layer A will decrease, which may result in a decrease in tensile shear adhesive strength or an adverse effect on coatability.

Furthermore, in the case where the amount of the crosslinking agent is more than 80.0 parts by weight, the interfacial peeling with the adherend B may occur, resulting in a decrease in tensile shear adhesive strength.

### (Oxazoline Group-containing Crosslinking Agent)

The oxazoline group-containing crosslinking agent is a compound having an oxazoline group, and among these, a polymer containing an oxazoline group is preferred. This polymer can be obtained by homopolymerizing an addition-polymerizable oxazoline group-containing monomers or by copolymerizing the addition-polymerizable oxazoline group-containing monomer with another monomer.

The polymer containing an oxazoline group is preferably an acrylic polymer which is a copolymer of an addition-polymerizable oxazoline group-containing monomer and a monomer having a (meth)acryloyl group. Further, in the polymer containing an oxazoline group, the acrylic polymer may have a polyalkylene oxide chain.

Examples of such an oxazoline group-containing crosslinking agent include, as the addition-polymerizable oxazoline group-containing monomer, 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, and 2-isopropenyl-5-ethyl-2-oxazoline, and these may be used alone or in mixture of two or more. Among these, 2-isopropenyl-2-oxazoline is preferred since it is easily available industrially. These addition-polymerizable oxazoline group-containing monomers may be used alone, or two or more kinds of monomers may be used in combination.

The other monomer may be any monomer that is copolymerizable with the addition-polymerizable oxazoline group-containing monomer. Examples of such a monomer include (meth)acrylic acid esters such as alkyl (meth)acrylates; unsaturated carboxylic acids such as acrylic acid, methacrylic acid, itaconic acid, maleic acid, fumaric acid, crotonic acid, styrenesulfonic acid, and salts thereof (salts include sodium salts, potassium salts, ammonium salts, and tertiary amine salts); unsaturated nitriles such as acrylonitrile and methacrylonitrile; unsaturated amides such as acrylamides, such as (meth)acrylamide, N-alkyl(meth)acrylamide, and N,N-dialkyl(meth)acrylamide; vinyl esters such as vinyl acetate and vinyl propionate; vinyl ethers such as methyl vinyl ether and ethyl vinyl ether; α-olefins such as ethylene and propylene; halogen-containing α,β-unsaturated monomers such as vinyl chloride, vinylidene chloride, and vinyl fluoride; and α,β-unsaturated aromatic monomers such as styrene and α-methylstyrene.

As the alkyl group in these alkyl (meth)acrylates and unsaturated amides, the alkyl group may be a methyl group, an ethyl group, an n-propyl group, an isopropyl group, an n-butyl group, an isobutyl group, a t-butyl group, a 2-ethylhexyl group, or a cyclohexyl group.

As the other monomer, a monomer having a polyalkylene oxide chain can also be used. As the monomer having a polyalkylene oxide chain, preferred is, for example, an ester obtained by adding a polyalkylene oxide chain to a hydrocarbon group of an unsaturated carboxylic acid ester such as (meth)acrylic acid esters. Here, the polyalkylene oxide chain is preferably polymethylene oxide, polyethylene oxide, polypropylene oxide, or polybutylene oxide. The number of repeating units in the polyalkylene oxide chain may be in the range of 3 to 100, for example.

The other monomer used in an oxazoline compound may be used alone or in combination of two or more kinds.

The amount of oxazoline groups in the oxazoline compound is preferably 0.5 mmol/g to 10 mmol/g, more preferably 1 mmol/g or more, still more preferably 3 mmol/g or more, and most preferably 4 mmol/g or more. Further, the amount is more preferably 9 mmol/g or less, still more preferably 8 mmol/g or less, and most preferably 6 mmol/g or less. In the case where the used amount is within the above range, durability of the coated film is easily improved.

### (Carbodiimide Group-containing Crosslinking Agent)

The carbodiimide group-containing crosslinking agent is a compound having two or more carbodiimide groups. This polymer can be obtained by homopolymerizing an addition-polymerizable carbodiimide group-containing monomer or by copolymerizing the addition-polymerizable carbodiimide group-containing monomer with another monomer.

The carbodiimide group-containing crosslinking agent preferably has a high weight average molecular weight and the weight average molecular weight is, for example, preferably 1,000 or more, more preferably 2,000 or more, and still more preferably 3,000 or more.

In the case where the molecular weight of the carbodiimide group-containing crosslinking agent is too small, hydrolysis resistance tends to decrease.

The carbodiimide equivalent of the carbodiimide group-containing crosslinking agent is preferably 50 or more, more preferably 100 or more, still more preferably 200 or more, and most preferably 300 or more. Further, the carbodiimide equivalent is preferably 800 or less, more preferably 700 or less, still more preferably 600 or less, and most preferably 500 or less. The carbodiimide equivalent is a chemical formula weight per 1 mol of carbodiimide groups.

In the case where the carbodiimide equivalent is within this range, the crosslinking agent exhibits good dispersibility in a composition to form the resin layer B, particularly in an aqueous dispersion containing a latex. Furthermore, a drying and film-forming temperature can be set to 80°C or higher, making it difficult to react at a temperature less than 80°C, and reactivity can be reliably improved under a heat bonding condition (of heating to 150°C to 200°C). In addition, a sufficient period of pot life can be ensured at a temperature of about room temperature.

The carbodiimide group-containing crosslinking agent is obtained by a known method. As the known method, a diisocyanate compound is carbodiimidized in the presence of a known catalyst. In this case, a hydroxy group-containing compound can be optionally reacted as a terminal-sealing agent before the carbodiimidization, simultaneously with the carbodiimidization, or after the carbodiimidization.

The diisocyanate compound used as a raw material for obtaining the carbodiimide group-containing crosslinking agent by such a method is not particularly limited. Examples of the diisocyanate compound include chain aliphatic diisocyanate compounds such as tetramethylene diisocyanate, pentamethylene diisocyanate, hexamethylene diisocyanate, dodecamethylene diisocyanate, 2,2,4-trimethylhexamethylene diisocyanate, and lysine diisocyanate; aromatic diisocyanate compounds such as tolylene diisocyanate, diphenylmethane diisocyanate, and 2,4,6-triisopropylbenzene-1,3-diyl diisocyanate; and aromatic group-containing aliphatic diisocyanate compounds such as xylylene diisocyanate and 1,3-bis(2-isocyanato-2-propyl)benzene.

### (Aqueous Dispersion to Form Resin Layer B)

In the present invention, as the aqueous dispersion to form the resin layer B, use can be made of an aqueous dispersion containing one or more selected from the carboxy-modified styrene-butadiene copolymer latex, the carboxy-modified acrylonitrile-styrene-butadiene copolymer latex, and the carboxy-modified methyl methacrylate-butadiene copolymer latex, and the crosslinking agent.

In order to improve the coatability of this aqueous dispersion, an aqueous thickener can be added to the aqueous dispersion as necessary to adjust viscosity. The viscosity can be adjusted to suit a coating machine by using an alkaline thickener, an associative thickener, or an aqueous thixotropic agent as the aqueous thickener. For example, an aqueous thixotropic agent such as THIXOL K-1000 manufactured by KYOEISHA CHEMICAL CO., LTD. including a carboxylic acid-containing copolymer can be used.

Further, a minimum film-forming temperature of the aqueous dispersion to form the resin layer B is preferably 30°C to 99°C.

### <Common Features between Resin Layer A and Resin Layer B>

### (Additives)

The resin layer A and the resin layer B of the thermoplastic multilayer adhesive film of the present invention can each independently contain a near-infrared absorbing material such as carbon black, graphene, graphite, diimonium salts, aminium salts, cyanine compounds, phthalocyanine compounds, dithiol metal complexes, naphthoquinone compounds, azo compounds, and talc, thereby enabling adhesion by irradiation with infrared rays such as laser light and heating.

In order to improve rigidity and crystallization temperature of the thermoplastic multilayer adhesive film according to the present invention, it is possible to contain inorganic fillers and nucleating agents such as talc, calcium carbonate, sepiolite, boehmite, bentonite, silica, titanium oxide, zinc oxide, glass beads, and metal fibers such as an aluminum fiber, a nickel fiber, and a copper fiber.

An organic antiblocking agent such as acrylic beads may be used in the thermoplastic multilayer adhesive film according to the present invention for the purpose of preventing adhesion. Unlike inorganic antiblocking agents, the organic antiblocking agent does not increase an ash content.

However, the thermoplastic multilayer adhesive film may or may not contain a pigment or a conductive filler for the purpose of imparting electrical conductivity.

A tackifier may or may not be added to the thermoplastic multilayer adhesive film according to the present invention, and may not be added in the case where adhesiveness is not required. Further, a plasticizer and various other crosslinking agents may or may not be added. Furthermore, neither the resin layer A nor the resin layer B is a foam, and they do not contain a foaming agent that foams upon heating.

A resin film having an easily peelable surface or the like may be attached to one or both sides of the thermoplastic multilayer adhesive film according to the present invention prior to use. **In** this case, at the time of use, the resin film is peeled off to expose the surface composed of the thermoplastic multilayer adhesive film according to the present invention, which can then be applied to a surface of an adherend.

Further, in the thermoplastic multilayer adhesive film according to the present invention, as long as the resin layer A has the resin layer A on both sides, a so-called intermediate layer may not be provided, or any intermediate layer may be provided. Further, the thermoplastic multilayer adhesive films according to the present invention may be laminated and bonded to both surfaces of a base sheet to form a structure of five layers in total.

Furthermore, in an adhesive region where adhesion is intended, both the resin layer A and the resin layer B of the thermoplastic multilayer adhesive film according to the present invention are preferably continuous layers. For example, it is not the case where the resin layer B is formed only on a part of one surface of the resin layer A. However, for example, even in the case where the resin layer B is designed to have a pattern such as dots or lines, such a case is not excluded if the pattern design allows the resin layer B to melt and liquefy by the heating and melting during the heat bonding, resulting in a uniformly wet state across the surface.

In the case where the thermoplastic multilayer adhesive film of the present invention in which the resin layers B are laminated on both surfaces of the resin layer A is used without intentionally adding a colorant to a part of the layers of the resulting laminate to cause a loss of transparency, and when transparent amorphous resins are laminated on surfaces of the resin layers B as the adherends B, adhesive interfaces between the resin layers B and the adherends B can be made transparent.

### (Production Method)

As a method for producing the thermoplastic multilayer adhesive film according to the present invention, first, the resin layer A can be obtained by a known method for obtaining a sheet-shaped product, such as performing a melt extrusion by using a T-die, a circular die or the like, and then cooling and solidifying.

Next, in order to form the resin layer B on one surface of the resin layer A, an aqueous dispersion for forming the resin layer B which contains, as raw materials of the resin layer B, one or more selected from the carboxy-modified styrene-butadiene copolymer latex, the carboxy-modified acrylonitrile-styrene-butadiene copolymer latex, and the carboxy-modified methyl methacrylate-butadiene copolymer latex, and the crosslinking agent, is applied to the one surface of the resin layer A.

The coating method thereof may be any known method capable of coating the aqueous dispersion, such as a gravure roll coater, a bar coater, a die coater, a roller, a spray, a curtain coater, immersion, brush coating, or spatula coating.

Further, when the aqueous dispersion for forming the resin layer B is applied, it is possible to apply a corona discharge treatment, a plasma discharge treatment, a UV/ozone treatment, a flame treatment, a primer treatment, and the like to the surface of the resin layer A in advance in order to improve surface wettability of the resin layer A.

In the case where the resin layers B are formed on both surfaces of the resin layer A, the formation of the resin layer B on the one surface is also performed on the other surface of the resin layer A.

After the aqueous dispersion for forming the resin layer B is applied to the surface of the resin layer A, the heating temperature for drying this coating layer is required to be a temperature at which the resin layer A does not soften.

For example, in the case where the resin layer A has a melting point of 110°C, the drying temperature of a layer formed from the aqueous dispersion for forming the resin layer B is set to 80°C to 85°C, and the drying time is set to about 2 minutes to 4 minutes. In the case where the resin layer A has a melting point of 130°C, the drying temperature of a layer formed from the aqueous dispersion for forming the resin layer B is set to 90°C to 95°C, and the drying time is set to about 1 minute to 2 minutes.

After the resin layer A is formed, a corona discharge treatment, a plasma discharge treatment, a UV/ozone treatment, a flame treatment, or the like can be performed on a surface, for example, on at least one surface of the resin layer A and/or on a surface of the resin layer B after forming the resin layer B, of the thermoplastic multilayer adhesive film, in order to improve surface wettability of the resin layer A or the resin layer B.

### (Bonding Method)

The adherend A and the adherend B can be bonded to each other by laminating the adherend A and the adherend B on the respective surface of the thermoplastic multilayer adhesive film according to the present invention and heating the resultant laminate by an arbitrary method. At this time, the heating temperature is set to be equal to or higher than a reaction temperature of the crosslinking agent contained in the resin layer B. Accordingly, it is possible to prevent deformation of the adherend, and the carboxy groups contained in the resin layer A and the resin layer B can react with the crosslinking agent to form a crosslinked structure.

At this time, temperatures of the adherend A and the adherend B during the bonding may be set lower than melting points or softening points thereof, so that only the thermoplastic multilayer adhesive film is melted while the adherend A and the adherend B do not melt or soften, thereby forming the above-mentioned crosslinked structure.

Further, by heating to a temperature higher than a melting point of at least one of the adherend A and the adherend B, bonding or formation of a layer formed with the adherend A or the adherend B can be performed.

The bonding using the thermoplastic multilayer adhesive film according to the present invention includes both the case in which the heating temperature condition during the bonding is a temperature at which neither of the two adherends melts, and the case in which the heating temperature condition is a temperature at which at least one of the two adherends melts. In the latter case, use can be made of a method including a step of superposing the following adherend A on the surface of the resin layer A of the thermoplastic multilayer adhesive film and heating to bond the two, and after this step, a step of forming a layer by the adherend B heat-molten on the surface of the resin layer B of the thermoplastic multilayer adhesive film; or a method including a step of superposing the following adherend B on the surface of the resin layer B of the thermoplastic multilayer adhesive film and heating to bond the two, and after this step, a step of forming a layer by the adherend A heat-molten on the surface of the resin layer A of the thermoplastic multilayer adhesive film. At this time, the heated and melted adherend B or adherend A may be injection-molded or cast-molded toward one surface of the thermoplastic multilayer adhesive film disposed in a forming die. Alternatively, the heated and melted adherend B or adherend A may be extrusion-molded. In the case where the adherend A is a metal, it is not the case where the metal is melted and supplied to one surface of the thermoplastic multilayer adhesive film disposed in the forming die to form a layer. In the case where the adherend A is a metal, a used method is limited to a method including a step of superposing the adherend A on a surface of the resin layer A of the thermoplastic multilayer adhesive film and heating to bond the two, and after this step, a step of forming a layer by the adherend B heat-molten on a surface of the resin layer B of the thermoplastic multilayer adhesive film.

A heating method used during the bonding is not limited, and any method can be used depending on characteristics of the adherend. For example, use can be made of hot plate pressing, high frequency dielectric heat bonding, resistance heat bonding, high frequency induction heat bonding, infrared heat bonding, laser heat bonding, autoclave heat bonding, heat lamination, ultrasonic heat bonding, vibration heat bonding, friction heat bonding, air hot pressing, pulse heat bonding, double belt press heat bonding, insert molding heat bonding, vacuum molding heat bonding, and the like.

In this bonding process, the crosslinking agent present in the resin layer B crosslinks the resin that constitutes the resin layer B, and further crosslinks the resin that constitutes the resin layer A, and crosslinks the resins that constitute the resin layer A and the resin layer B together, thereby enabling these layers to be strongly bonded together.

In the case of a thermoplastic multilayer adhesive film including three or more layers in which both surfaces are the resin layers A and the resin layer B is provided in an inner layer thereof, or in the case of a thermoplastic multilayer adhesive film including three or more layers in which the resin layers B are provided on both surfaces and the resin layer A is provided in an inner layer thereof, the adherend A and the adherend B may be superposed on both surfaces of the thermoplastic multilayer adhesive film and then heated by the above-mentioned method to bond the adherend A and the adherend B with the surfaces. Furthermore, the resin layer A may be a multilayer film having the resin layers A disposed on both surfaces thereof, and the resin layer B may be a multilayer film having the resin layer B disposed on both surfaces thereof.

### (Laminate)

The laminate according to the present invention is formed by bonding the two adherends, that is, the adherend A and the adherend B, with the thermoplastic multilayer adhesive film according to the present invention. The adherend A and the adherend B are made of the following materials, respectively, as long as they do not deteriorate by conditions such as heating during the bonding. Further, it is preferable to adjust the heating temperature during the bonding depending on the materials such that both the adherend A and the adherend B do not melt during the bonding process.

The adherend A to be bonded with the resin layer A is made of one or more materials selected from steel plates such as zinc-plated steel plates, metals such as iron, aluminum, titanium, copper, zinc, tin, and magnesium alloys, non-metals such as pottery and ceramics, crystalline thermoplastic resins such as polypropylene-based resins, polyethylene-based resins, and polyamide-based resins, thermosetting resins such as polyurethane resins, epoxy resins, and phenolic resins, and the like.

The adherend B to be bonded with the resin layer B is made of one or more materials selected from an ABS resin, a polycarbonate resin, a (meth)acrylic resin, a polyvinyl chloride resin, amorphous polyester resins, amorphous resins, and the like.

Shapes of the adherend A and the adherend B can be independently selected from any shape such as a sheet, a film, a plate, a rod, an irregular shape, a fiber, a textile product, a woven fabric, a nonwoven fabric, and the like.

The adherend A and the adherend B may each independently contain, in the case of a resin, a resin reinforced with a carbon fiber or a glass fiber, various colorants, extender pigments, plasticizers, and known additives that can be contained in a resin composition.

The obtained laminate can be used in fields where the materials of the above-mentioned adherends A and B have been used in the related art, such as interior and exterior parts of automobiles, electrical equipment, housings for smartphones, tablet terminals, and PCs, housings for home appliances, industrial equipment, daily necessities such as footwear such as shoes and sandals, furniture, and the like.

The tensile shear adhesive strength of the laminate is preferably 4.5 MPa or more, more preferably 7.0 MPa or more, still more preferably 10.0 MPa or more, and most preferably 12.0 MPa or more.

The higher the tensile shear adhesive strength, the stronger the structure after the bonding will be held.

The 90-degree peel adhesive strength of the laminate is preferably 100 N/25 mm or more, more preferably 150 N/25 mm or more, still more preferably 200 N/25 mm or more, and most preferably 250 N/25 mm or more.

The higher the tensile shear adhesive strength and the 90-degree peel adhesive strength, the stronger the structure after the bonding will be held.

### Examples

Hereinafter, the present invention will be described more specifically with reference to Examples.

The Examples show one embodiment of the invention, and the present invention is not limited thereto.

Materials were thoroughly mixed and kneaded according to the respective blended components in Table 1 below (the properties of each component are shown in Table 2), and then resin layers A1 to A7 (each having a thickness of 80 µm) were obtained by extrusion molding. Thereafter, a corona discharge treatment was carried out on a surface onto which the aqueous dispersion to form the resin layer B was to be applied. For example, the resin layer A2 contains 20 parts by weight of maleic acid-modified polyethylene, and other components, that is, 30 parts by weight of linear low density polyethylene and 50 parts by weight of ethylene-1-hexene elastomer.

On the other hand, components were thoroughly stirred to obtain the respective blended components shown in Table 3 (the properties of each component are shown in Table 4), thereby obtaining aqueous dispersions to form resin layers B1 to B20. Table 3 shows blending amounts of the latex and the crosslinking agent including the solvent, and solid contents thereof excluding the solvent. Furthermore, the solid content in terms of part by weight of the crosslinking agent relative to 100 parts by weight of a copolymer solid in the latex was expressed as a solid content ratio. For B16 and B17, in the entire crosslinking agent, the weight of the polyvalent carbodiimide solid content derived from the aqueous polyvalent carbodiimide solution and the weight of the polyvalent carbodiimide solid content derived from the aqueous polyvalent carbodiimide dispersion are the same.

For crosslinking agents in Table 3 below, an aqueous polyvalent carbodiimide solution (concentration: 40% by weight (Carbodilite manufactured by Nisshinbo Chemical Inc.)), a polyvalent carbodiimide dispersion (concentration: 40% by weight (Carbodilite manufactured by Nisshinbo Chemical Inc.)), an aqueous oxazoline group-containing polymer solution (concentration: 25% by weight (Epocros manufactured by Nippon Shokubai Co., Ltd.)), an oxazoline group-containing emulsion (concentration: 40% by weight (Epocros manufactured by Nippon Shokubai Co., Ltd.)), an aqueous water-soluble epoxy resin solution (concentration: 60% by weight (Rikabond manufactured by Chuo Rika Kogyo Co., Ltd.)), an aqueous water-based blocked isocyanate solution (concentration: 25% by weight (Meikato manufactured by MEISEI CHEMICAL WORKS, LTD.)), and an aqueous titanium-based organometallic salt solution (concentration: 44% by weight (ORGATIX manufactured by Matsumoto Fine Chemical Co., Ltd.)) were used.

A size of the resin layers A1 to A7 was adjusted to an A4 size. The aqueous dispersion to form the resin layers B1 to B20 was applied to one side of each of the resin layers A1 to A7 to obtain thermoplastic multilayer adhesive films of Examples 1 to 26 and Comparative Examples 1 to 12 as shown in Tables 6 to 8.

The above resin layers A1 to A7 having an A4 size were fixed onto glass plates with a tape. The aqueous dispersion to form the resin layers B1 to B20 was applied to surfaces of the resin layers A1 to A7 by using a Meyer bar (#16) so as to have a thickness of 15 µm to 20 µm after drying.

The resin layers A1 to A7 coated with the aqueous dispersion to form the resin layers B1 to B20 were placed in a dryer and heated at 80°C to 95°C for 1 minute to 4 minutes and dried.

The dried resin layers B1 to B20 were evaluated for coatability according to the following criteria.
A: good
B: slightly cloudy or cracked
C: large crack
D: stickiness, unevenness, or repellence

**[Table 1]**

| Resin layer A | Blended component (blend by wt%) | |
|---|---|---|
| | Carboxy group-containing polyolefin-based resin | Other components |
| Resin layer A1 | Maleic acid-modified polypropylene (50) | Ethylene-propylene elastomer (50) |
| Resin layer A2 | Maleic acid-modified polyethylene (20) | Linear low-density polyethylene (30) |
| | | Ethylene-1-hexene elastomer (50) |
| Resin layer A3 | Sodium ionomer of ethylene-methacrylic acid copolymer (70) | Ethylene-methyl methacrylate copolymer (30) |
| Resin layer a4 | Random polypropylene (100) | |
| Resin layer a5 | Ethylene-methyl methacrylate copolymer (100) | |
| Resin layer A6 | Maleic acid-modified polyethylene (10) | Linear low-density polyethylene (90) |
| Resin layer A7 | Maleic acid-modified polyethylene (100) | |

**[Table 2]**

| Resin name | Density [g/cm³] | MFR [g/10 min] |
|---|---|---|
| Maleic acid-modified polypropylene | 0.89 | 6 |
| Maleic acid-modified polyethylene | 0.94 | 2 |
| Sodium ionomer of ethylene-methacrylic acid copolymer (70) | 0.94 | 0.9 |
| Linear low-density polyethylene | 0.91 | 2 |
| Random polypropylene | 0.9 | 1.5 |
| Ethylene-propylene elastomer | 0.89 | 6 |
| Ethylene-1-hexene elastomer | 0.9 | 2 |
| Ethylene-methyl methacrylate copolymer | 0.94 | 2 |

**[Table 3]**

| Resin layer B | Blended component | | | | | |
|---|---|---|---|---|---|---|
| | Latex | | | Crosslinking agent | | |
| | Copolymer | Blending amount [wt%] | Solid content concentration [wt%] | Types and forms | Blending amount [wt%] | Solid content concentration [wt%] |
| Resin layer B1 | Carboxy-modified styrene-butadiene copolymer | 92 | 44.2 | Aqueous polyvalent carbodiimide solution | 8 | 3.2 |
| Resin layer B2 | Carboxy-modified acrylonitrile-styrene-butadiene copolymer | 92 | 46.0 | Aqueous oxazoline group-containing polymer solution | 8 | 2.0 |
| Resin layer B3 | Carboxy-modified acrylonitrile-styrene-butadiene copolymer | 92 | 46.0 | Aqueous polyvalent carbodiimide solution | 8 | 3.2 |
| Resin layer b4 | Carboxy-modified styrene-butadiene copolymer | 92 | 44.2 | | | |
| Resin layer B5 | Carboxy-modified acrylonitrile-styrene-butadiene copolymer | 92 | 46.0 | Aqueous water-soluble epoxy resin solution | 8 | 4.8 |
| Resin layer B6 | Carboxy-modified acrylonitrile-styrene-butadiene copolymer | 92 | 46.0 | Aqueous water-based blocked isocyanate solution | 8 | 2.0 |
| Resin layer B7 | Carboxy-modified acrylonitrile-styrene-butadiene copolymer | 92 | 46.0 | Aqueous titanium-based organometallic salt solution | 8 | 3.5 |

**[Table 3 (Continued)]**

| Resin layer B | Blended component | | | | | |
|---|---|---|---|---|---|---|
| | Latex | | | Crosslinking agent | | |
| | Copolymer | Blending amount [wt%] | Solid content concentration [wt%] | Types and forms | Blending amount [wt%] | Solid content concentration [wt%] |
| Resin layer b8 | Carboxy-modified acrylonitrile-butadiene copolymer | 92 | 35.0 | Aqueous polyvalent carbodiimide solution | 8 | 3.2 |
| Resin layer b9 | Styrene-butadiene copolymer | 92 | 44.2 | Aqueous polyvalent carbodiimide solution | 8 | 3.2 |
| Resin layer b10 | Acrylonitrile-styrene-butadiene copolymer | 92 | 35.0 | Aqueous polyvalent carbodiimide solution | 8 | 3.2 |
| Resin layer B11 | Carboxy-modified methyl methacrylate-butadiene copolymer | 92 | 44.2 | Aqueous polyvalent carbodiimide solution | 8 | 3.2 |
| Resin layer B12 | Carboxy-modified styrene-butadiene copolymer | 97 | 46.6 | Aqueous polyvalent carbodiimide solution | 3 | 1.2 |
| Resin layer B13 | Carboxy-modified styrene-butadiene copolymer | 67 | 32.2 | Aqueous polyvalent carbodiimide solution | 33 | 13.2 |
| Resin layer B14 | Carboxy-modified styrene-butadiene copolymer | 99 | 47.5 | Aqueous polyvalent carbodiimide solution | 1 | 0.4 |

**[Table 3 (Continued)]**

| Resin layer B | Blended component | | | | | |
|---|---|---|---|---|---|---|
| | Latex | | | Crosslinking agent | | |
| | Copolymer | Blending amount [wt%] | Solid content concentration [wt%] | Types and forms | Blending amount [wt%] | Solid content concentration [wt%] |
| Resin layer B15 | Carboxy-modified acrylonitrile-styrene-butadiene copolymer | 88 | 44.0 | Oxazoline group-containing emulsion | 12 | 4.8 |
| Resin layer B16 | Carboxy-modified acrylonitrile-styrene-butadiene copolymer | 92 | 46.0 | Aqueous polyvalent carbodiimide solution + aqueous polyvalent carbodiimide dispersion | 8 | 3.2 |
| Resin layer B17 | Carboxy-modified acrylonitrile-styrene-butadiene copolymer | 84 | 42.0 | Aqueous polyvalent carbodiimide solution + aqueous polyvalent carbodiimide dispersion | 16 | 6.4 |
| Resin layer B18 | Carboxy-modified acrylonitrile-styrene-butadiene copolymer | 92 | 46.0 | Aqueous polyvalent carbodiimide dispersion | 8 | 3.2 |
| Resin layer B19 | Carboxy-modified acrylonitrile-styrene-butadiene copolymer | 84 | 42.0 | Aqueous polyvalent carbodiimide solution | 16 | 6.4 |
| Resin layer B20 | Carboxy-modified acrylonitrile-styrene-butadiene copolymer | 84 | 42.0 | Aqueous polyvalent carbodiimide dispersion | 16 | 6.4 |
| b11 | | | | Aqueous polyvalent carbodiimide solution | 100 | 40 |
| b12 | | | | Aqueous polyvalent carbodiimide dispersion | 100 | 40 |

**[Table 3 (Continued)]**

| Resin layer B | Solid content ratio [parts by weight] | Thickness [µm] | Evaluation of Coatability |
|---|---|---|---|
| Resin layer B1 | 7.2 | 15 µm to 20 µm | A |
| Resin layer B2 | 4.3 | | A |
| Resin layer B3 | 7.0 | | A |
| Resin layer b4 | 0.0 | | C |
| Resin layer B5 | 10.4 | | B |
| Resin layer B6 | 4.3 | | B |
| Resin layer B7 | 7.7 | | B |
| Resin layer b8 | 9.2 | | D |
| Resin layer b9 | 7.2 | | D |
| Resin layer b10 | 9.2 | | D |
| Resin layer B11 | 7.2 | | B |
| Resin layer B12 | 2.6 | | A |
| Resin layer B13 | 41.0 | | A |
| Resin layer B14 | 0.8 | | B |
| Resin layer B15 | 10.9 | | A |
| Resin layer B16 | 7.0 | | A |
| Resin layer B17 | 15.2 | | A |
| Resin layer B18 | 7.0 | | A |
| Resin layer B19 | 15.2 | | A |
| Resin layer B20 | 15.2 | | A |
| b11 | | | D |
| b12 | | | D |

**[Table 4]**

| Latex | Total solid content (wt%) | pH | Particle diameter (nm) |
|---|---|---|---|
| Carboxy-modified styrene-butadiene copolymer | 48 | 7 | 160 |
| Styrene-butadiene copolymer | 48 | 9.5 | 220 |
| Carboxy-modified acrylonitrile-styrene-butadiene copolymer | 50 | 7 | 100 |
| Acrylonitrile-styrene-butadiene copolymer | 38 | 7.5 | 88 |
| Carboxy-modified acrylonitrile-butadiene copolymer | 38 | 7.8 | 135 |
| Carboxy-modified methyl methacrylate-butadiene copolymer | 48 | 8.5 | 150 |

### (Method for Measuring Tensile Shear Adhesive Strength)

The thermoplastic multilayer adhesive films and the adherends A and B were combined as shown in Tables 6 and 7 below and bonded as described below, to obtain respective laminates.

Each of the thermoplastic multilayer adhesive films in Examples and Comparative Examples was sandwiched between the adherend A and the adherend B. Further, the laminates were heat-bonded by using a hot plate press (CYPT-50 manufactured by SINTOKOGIO, LTD.). At this time, the adherend A was bonded to a surface on the resin layer A(a) side, and the adherend B was bonded to a surface on the resin layer B(b) side.

Among the adherends A and B, glass fiber-filled 6-nylon test pieces were 2.0 mm (thickness) × 20 mm (width) × 100 mm (length), ABS resin test pieces were 3.0 mm (thickness) × 20 mm (width) × 75 mm (length), and GA steel plate (zinc-iron alloy plated) test pieces were 0.8 mm (thickness) × 20 mm (width) × 75 mm (length).

Each of the used thermoplastic multilayer adhesive films was 20 mm (width) x 10 mm (length), and the bonding area (200 mm²) in each of Examples and Comparative Examples corresponded to bonding over the entire surface of the thermoplastic multilayer adhesive film.

The heat bonding conditions for measuring the tensile shear adhesive strength in Examples and Comparative Examples shown in Tables 6 and 7 are shown in Table 5-1. In Table 5-1, for example, upper 235°C/lower 65°C means that the adherend A side was heated at 235°C and the adherend B side was heated at 65°C, and a pressure of 0.4 MPa indicates that the pressure applied to the adherends A and B and the respective thermoplastic multilayer adhesive films sandwiched therebetween during the heat bonding was 0.4 MPa.

The prepared laminates were subjected to a measurement of the tensile shear adhesive strength (MPa) at 25°C by using a strength and elongation tester (Autograph: AGS-X manufactured by SHIMADZU CORPORATION). The non-bonded ends of the adherend A and the adherend B were gripped with grippers. While the adherend A was fixed, the gripper gripping the adherend B was pulled in a longitudinal direction of the adherend B at a tensile speed of 100 mm/min.

When the adherend B was pulled, strength was obtained when a cohesive failure occurred at a bonded portion, when one of the adherends was broken, or when interfacial peeling occurred at the bonded portion, and the obtained strength was divided by the bonding area to obtain the tensile shear adhesive strength (MPa).

**[Table 5-1]**

| Tensile shear adhesive strength | Heat bonding condition | Adherend A | Adherend B |
|---|---|---|---|
| Examples 1 to 12 Comparative Examples 1 to 6 | Upper 235°C/lower 65°C, pressurization time: 300 seconds, bonding area: 200 mm² (20 mm × 10 mm), pressure: 0.4 MPa, and pressurize and cool to 90°C | Glass fiber-filled 6-nylon | ABS resin |
| Examples 13 to 20 Comparative Examples 7 to 10 | Upper 185°C/lower 50°C, pressurization time: 100 seconds, bonding area: 200 mm² (20 mm × 10 mm), pressure: 0.4 MPa, and pressurize and cool to 90°C | GA steel plate | ABS resin |

### (Method for Measuring 90-degree Peel Adhesive Strength)

The thermoplastic multilayer adhesive films and the adherends A and B were combined as shown in Tables 6 and 7 below and bonded as described below, to obtain the respective laminates.

Each of the thermoplastic multilayer adhesive films in Examples and Comparative Examples was sandwiched between the adherend A and the adherend B. Further, the laminates were heat-bonded by using a hot plate press (CYPT-50 manufactured by SINTOKOGIO, LTD.). At this time, the adherend A was bonded to a surface on the resin layer A(a) side, and the adherend B was bonded to a surface on the resin layer B(b) side.

Among the adherends A and B, ABS resin test pieces were 3.0 mm (thickness) x 25 mm (width) x 130 mm (length), and aluminum test pieces were 0.5 mm (thickness) x 25 mm (width) x 130 mm (length).

Each of the used thermoplastic multilayer adhesive films was 25 mm (width) x 80 mm (length), and the bonding area (2000 mm²) in each of Examples and Comparative Examples corresponded to bonding over the entire surface of the thermoplastic multilayer adhesive film. At this time, since each thermoplastic multilayer adhesive film was 50 mm shorter than the length of the adherends A and B, after the bonding, the ends of the adherend A and the adherend B would protrude from each thermoplastic multilayer adhesive film.

The heat bonding conditions for measuring the 90-degree peel adhesive strength in Examples and Comparative Examples shown in Table 8 are shown in Table 5-2. **In** Table 5-2, for example, upper 185°C/lower 50°C means that the adherend A (0.5 mm-thick aluminum plate) side was heated at 185°C and the adherend B (3 mm-thick ABS resin) side was heated at 50°C, and a pressure of 1.0 MPa indicates that the pressure applied to the adherends A and B and the respective thermoplastic multilayer adhesive films sandwiched therebetween during the heat bonding was 1.0 MPa.

The prepared laminates were subjected to a measurement of the 90-degree peel adhesive strength (N/25 mm) at 25°C by using a strength and elongation tester (Autograph: AGS-X manufactured by SHIMADZU CORPORATION). The non-bonded end of the adherend A was bent upward by 90-degrees, and the end was gripped with an upper gripper of the autograph. In a state in which the bent portion was maintained at 90-degrees, the upper gripper was raised at a speed of 100 mm/min, and the strength was obtained as the 90-degree peel adhesive strength (N/25 mm) when a cohesive failure occurred at a bonded portion, when one of the adherends was broken, or when interfacial peeling occurred at the bonded portion.

**[Table 5-2]**

| 90-degree peel adhesive strength | Heat bonding condition | Adherend A | Adherend B |
|---|---|---|---|
| Examples 21 to 26 Comparative Examples 11 and 12 | Upper 185°C/lower 50°C, pressurization time: 60 seconds, bonding area: 2000 mm² (25 mm × 80 mm), pressure: 1.0 MPa, and pressurize and cool to 80°C | Aluminum | ABS resin |

**[Table 6]**

| | Adherend A (glass fiber-filled 6-nylon) /Adherend B (ABS resin) | | Tensile shear adhesive strength (MPa) |
|---|---|---|---|
| | Thermoplastic multilayer adhesive film | | |
| Ex. 1 | Resin layer A1 | Resin layer B1 | 14.4 |
| Ex. 2 | Resin layer A1 | Resin layer B2 | 12.5 |
| Ex. 3 | Resin layer A2 | Resin layer B2 | 12.0 |
| Ex. 4 | Resin layer A1 | Resin layer B5 | 9.6 |
| Ex. 5 | Resin layer A1 | Resin layer B6 | 8.4 |
| Ex. 6 | Resin layer A1 | Resin layer B7 | 7.9 |
| Ex. 7 | Resin layer A1 | Resin layer B11 | 7.5 |
| Ex. 8 | Resin layer A6 | Resin layer B1 | 8.6 |
| Ex. 9 | Resin layer A7 | Resin layer B1 | 15.4 |
| Ex. 10 | Resin layer A1 | Resin layer B12 | 11.8 |
| Ex. 11 | Resin layer A1 | Resin layer B13 | 4.6 |
| Ex. 12 | Resin layer A1 | Resin layer B14 | 4.9 |
| Comp. Ex. 1 | Resin layer A1 | None | 1.5 |
| Comp. Ex. 2 | None | Resin layer B1 | 4.3 |
| Comp. Ex. 3 | Resin layer A1 | Resin layer b4 | 3.9 |
| Comp. Ex. 4 | Resin layer A1 | Resin layer b8 | 2.4 |
| Comp. Ex. 5 | Resin layer A1 | Resin layer b9 | 4.1 |
| Comp. Ex. 6 | Resin layer A1 | Resin layer b10 | 0.5 |

**[Table 7]**

| | Adherend A (GA steel plate (metal)) /Adherend B (ABS resin) | | Tensile shear adhesive strength (MPa) |
|---|---|---|---|
| | Thermoplastic multilayer adhesive film | | |
| Ex. 13 | Resin layer A1 | Resin layer B1 | 15.1 |
| Ex. 14 | Resin layer A1 | Resin layer B2 | 14.6 |
| Ex. 15 | Resin layer A2 | Resin layer B2 | 14.5 |
| Ex. 16 | Resin layer A3 | Resin layer B3 | 13.0 |
| Ex. 17 | Resin layer A1 | Resin layer B15 | 11.9 |
| Ex. 18 | Resin layer A1 | Resin layer B16 | 13.5 |
| Ex. 19 | Resin layer A1 | Resin layer B17 | 15.1 |
| Ex. 20 | Resin layer A1 | Resin layer B18 | 14.2 |
| Comp. Ex. 7 | Resin layer A1 | None | 1.5 |
| Comp. Ex. 8 | Resin layer a4 | None | 0.2 |
| Comp. Ex. 9 | Resin layer a5 | Resin layer B3 | 2.7 |
| Comp. Ex. 10 | Resin layer A1 | b11 only aqueous polyvalent carbodiimide solution | 1.9 |

**[Table 8]**

| | Adherend A (aluminum A1050P (metal)) /Adherend B (ABS resin) | | 90-degree peel adhesive strength (N/25 mm) |
|---|---|---|---|
| | Thermoplastic multilayer adhesive film | | |
| Ex. 21 | Resin layer A1 | Resin layer B1 | 203.9 |
| Ex. 22 | Resin layer A1 | Resin layer B16 | 237.9 |
| Ex. 23 | Resin layer A1 | Resin layer B17 | 280.2 |
| Ex. 24 | Resin layer A1 | Resin layer B18 | 218.6 |
| Ex. 25 | Resin layer A1 | Resin layer B19 | 229.7 |
| Ex. 26 | Resin layer A1 | Resin layer B20 | 228.0 |
| Comp. Ex. 11 | Resin layer A1 | b11 only aqueous polyvalent carbodiimide solution | 19.6 |
| Comp. Ex. 12 | Resin layer A1 | b12 only aqueous polyvalent carbodiimide dispersion | 15.5 |

According to each of Examples shown in Tables 6 and 7, it is possible to bond the glass fiber-filled 6-nylon to the ABS resin and further to bond the GA steel plate to the ABS resin so as to obtain sufficiently high tensile shear adhesive strength. For example, as a result of measuring the tensile shear adhesive strength, according to Examples 4 and 8, the interfacial peeling occurred at an interface between the resin layer A or B and the respective adherend, and the cohesive failure in the resin layer A and/or the resin layer B were mixed. Furthermore, when the tensile shear adhesive strength exceeded 12.0 MPa, the cohesive failure occurred exclusively.

On the other hand, when the bonding was performed by only one of the resin layers as in Comparative Examples 1, 2, 7 and 8, the tensile shear adhesive strength was extremely low. Further, in Comparative Example 9 in which the resin used in the resin layer A was not that of the present invention, sufficient tensile shear adhesive strength could not be obtained. Furthermore, according to Comparative Example 3 in which the resin layer B did not contain the crosslinking agent, and Comparative Examples 4 to 6 in which the resin layer B containing a resin other than the resin of the present invention was used, the coatability was poor when the resin layer B was provided and sufficient tensile shear adhesive strength could not be obtained. According to Comparative Example 10 in which a layer was obtained only from an aqueous polyvalent carbodiimide solution, sufficient tensile shear adhesive strength could not be obtained.

In general, in a combination of a metal and a resin, since linear expansion coefficients greatly differ, the adherend after the heat bonding easily peels off. According to Examples 21 to 26 shown in Table 8, which were Examples according to the present invention, high adhesive strength was obtained even when such a case of bonding the aluminum plate and the ABS resin. In particular, Examples 22 and 23 in which a crosslinking agent obtained by mixing an aqueous polyvalent carbodiimide solution and an aqueous polyvalent carbodiimide dispersion was used, had a 90-degree peel adhesive strength greater than that in Examples 21 and 23 to 26 in which only one of the two was used.

Similarly, in Comparative Examples 11 and 12 in which only the aqueous polyvalent carbodiimide solution and only the aqueous polyvalent carbodiimide dispersion were respectively obtained, sufficient 90-degree peel adhesive strength could not be obtained.

## Claims

1. A thermoplastic multilayer adhesive film comprising the following resin layer A and the following resin layer B:
resin layer A: a layer containing a carboxylic acid-modified polyolefin and/or an ionomer, and
resin layer B: a layer containing one or more selected from a carboxy-modified styrene-butadiene copolymer, a carboxy-modified acrylonitrile-styrene-butadiene copolymer, and a carboxy-modified methyl methacrylate-butadiene copolymer, and a crosslinking agent.

2. The thermoplastic multilayer adhesive film according to claim 1, wherein
the crosslinking agent contained in the resin layer B is a crosslinking agent containing an oxazoline group or a carbodiimide group.

3. The thermoplastic multilayer adhesive film according to claim 1 or 2, wherein
in the resin layer A, a total content of the carboxylic acid-modified polyolefin and the ionomer is 8.0% by weight or more.

4. The thermoplastic multilayer adhesive film according to claim 1 or 2, wherein
in the resin layer B, a content of the crosslinking agent is 1.0 part by weight to 80.0 parts by weight with respect to 100 parts by weight in total of the one or more selected from the carboxy-modified styrene-butadiene copolymer, the carboxy-modified acrylonitrile-styrene-butadiene copolymer, and the carboxy-modified methyl methacrylate-butadiene copolymer.

5. A laminate obtained by heat-bonding the following adherend A to a surface of the resin layer A and the following adherend B to a surface of the resin layer B of the thermoplastic multilayer adhesive film according to claim 1 or 2,
adherend A: one or more selected from a metal, a polypropylene resin, a polyethylene resin, a polyamide resin, and a thermosetting resin, and
adherend B: one or more selected from an ABS resin, a polycarbonate resin, an acrylic resin, a polyvinyl chloride resin, and an amorphous polyester resin.

6. A bonding method comprising:
superposing the following adherend A on a surface of the resin layer A of the thermoplastic multilayer adhesive film according to claim 1 or 2;
superposing the following adherend B on a surface of the resin layer B of the thermoplastic multilayer adhesive film; and
heat-melting and heat-bonding the resin layer A and the resin layer B,
adherend A: one or more selected from a metal, a polypropylene resin, a polyethylene resin, a polyamide resin, and a thermosetting resin, and
adherend B: one or more selected from an ABS resin, a polycarbonate resin, an acrylic resin, a polyvinyl chloride resin, and an amorphous polyester resin.

7. A method comprising:
a step of superposing the following adherend A on a surface of the resin layer A of the thermoplastic multilayer adhesive film according to claim 1 or 2 and heating to bond the two; and
after this step, a step of forming a layer by the following adherend B heat-molten on a surface of the resin layer B of the thermoplastic multilayer adhesive film,
or a method comprising:
a step of superposing the following adherend B on a surface of the resin layer B of the thermoplastic multilayer adhesive film according to claim 1 or 2 and heating to bond the two; and
after this step, a step of forming a layer by the following adherend A heat-molten on a surface of the resin layer A of the thermoplastic multilayer adhesive film,
adherend A: one or more selected from a metal, a polypropylene resin, a polyethylene resin, a polyamide resin, and a thermosetting resin, and
adherend B: one or more selected from an ABS resin, a polycarbonate resin, an acrylic resin, a polyvinyl chloride resin, and an amorphous polyester resin.

8. A method for producing a thermoplastic multilayer adhesive film, the method comprising:
a step of applying an aqueous composition containing a crosslinking agent and one or more selected from a carboxy-modified styrene-butadiene copolymer latex, a carboxy-modified acrylonitrile-styrene-butadiene copolymer latex, and a carboxy-modified methyl methacrylate-butadiene copolymer latex onto a resin layer A that includes a layer containing a carboxylic acid-modified polyolefin or an ionomer and that has been subjected to a surface treatment as necessary; and
a step of drying water at a temperature at which the resin layer A does not soften or melt, and forming a resin layer B.
